Europäisches Patentamt

(19) European Patent Office

Office européen des brevets

(11) Publication number: **0 314 802**
**A1**

(12) # EUROPEAN PATENT APPLICATION
published in accordance with Art. 158(3) EPC

(21) Application number: **88903938.4**

(22) Date of filing: **28.04.88**

Data of the international application taken as a basis:

(86) International application number:
**PCT/JP88/00423**

(87) International publication number:
**WO88/08764 (17.11.88 88/25)**

(51) Int. Cl.³: **B 23 B 3/16**

(30) Priority: **09.05.87 JP 112867/87**

(43) Date of publication of application:
**10.05.89 Bulletin 89/19**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **IWAGAYA, Takashi**
**2789-19, Nakano-machi Hachioji-shi**
**Tokyo 192(JP)**

(74) Representative: **Brunner, Michael John et al,**
**GILL JENNINGS & EVERY 53-64 Chancery Lane**
**London WC2A 1HN(GB)**

(54) **HIGH-EFFICIENCY TOOL SELECTION SYSTEM.**

(57) This invention relates to a high-efficiency tool selection system in working with a numerical controlled lathe having a plurality of turrets (3, 4). Tool replacement on the turret (4) to be used next has been instructed to a working program and the tool replacement on the turret (4) to be next used is executed concurrently with working with the tool (3a) of the turret (3) that is now in use, and the turret (4) is located to the work start point. In this manner, an idle time between working steps where the working turrets are replaced can be eliminated.

FIG. 3

0314802

# D E S C R I P T I O N

## HIGH-EFFICIENCY TOOL SELECTING METHOD

### Technical Field

The present invention relates to a high-efficiency tool selecting method in machining operation using a numerically controlled lathe having a plurality of turrets, and more particularly to a high-efficiency tool selecting method for shortening a machining time by changing tools on a turret to be used next during the machining process.

### Background Art

For increasing machining efficiency, numerically controlled lathes each having a plurality of turrets are widely used in the art. The machining efficiency of a numerically controlled lathe is increased by employing such turrets in parallel.

Since, however, tools are changed sequentially according to commands of a program, the machining process has to be suspended after a previous machining operation has been completed until the tool changing operation is finished. Such tool changing on a numerically controlled lathe of a small size which effects complex machining operation results in a considerable time loss because tools are changed frequently.

- 2 -

## Disclosure of the Invention

It is an object of the present invention to provide a high-efficiency tool selecting method which will solve the above problems and which shortens a machining time by changing tools on a turret to be used next during the machining process.

In order to solve the aforesaid problems, there is provided in accordance with the present invention a high-efficiency tool selecting method in machining operation using a numerically controlled lathe having a plurality of turrets, said method comprising the steps of:

commanding a tool changing operation on a turret to be used next in a machining program;

executing the tool changing operation on the turret to be used next while at the same time a machining operation is being effected by a tool of a turret now in use; and

positioning the turret to be used next into a machining starting point.

Since the tools on the turret to be employed next are changed and the turret is readied in the machining starting point during the present machining operation, a next machining operation can immediately be carried out, and any downtime which would otherwise be required by the tool changing can be omitted.

## Brief Description of the Drawings

FIG. 1 is a block diagram of an embodiment of the present invention;

FIG. 2 is a view showing the relationship between a program and a machining operation according to the embodiment of the invention; and

FIG. 3 is a flowchart of the embodiment of the present invention.


Best Mode for Carrying Out the Invention

An embodiment of the present invention will hereinafter be described in specific detail with reference to the drawings.

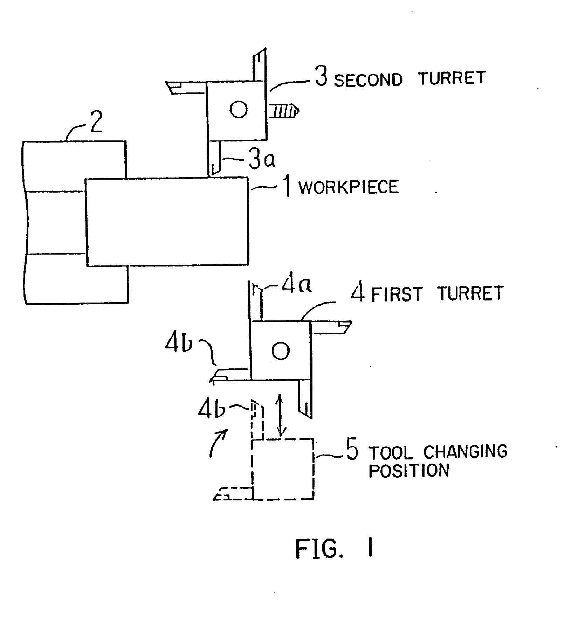

FIG. 1 is a block diagram of an embodiment of the present invention. A workpiece 1 is held by a chuck 2. Denoted at 3 is a second turret to which a tool 3a and other tools are fixed, and 4 a first turret to which a tool 4a and other tools are fixed. For changing tools, the first turret 4 is retracted to a tool changing position 5 in which the tools will be changed.

In FIG. 1, the workpiece 1 is machined by the tool 3a on the second turret 3, and will be next machined by the tool 4b on the first turret 4. It is assumed that the tool 4a is selected on the first turret 4. A command for replacing the tool 4a with the tool 4b on the first turret 4 is programmed in advance in a program for machining the workpiece 1 with the tool 3a on the second turret 3. While the workpiece 1 is being machined by the tool 3a on the second turret 3, the tool 4a is replaced with the tool 4b on the first turret 4, and the first turret 4 is caused to approach a machining start point so that a next machining operation will immediately be carried out. Therefore, there is no time loss in changing the tools on the first turret 4, and machining efficiency is increased.

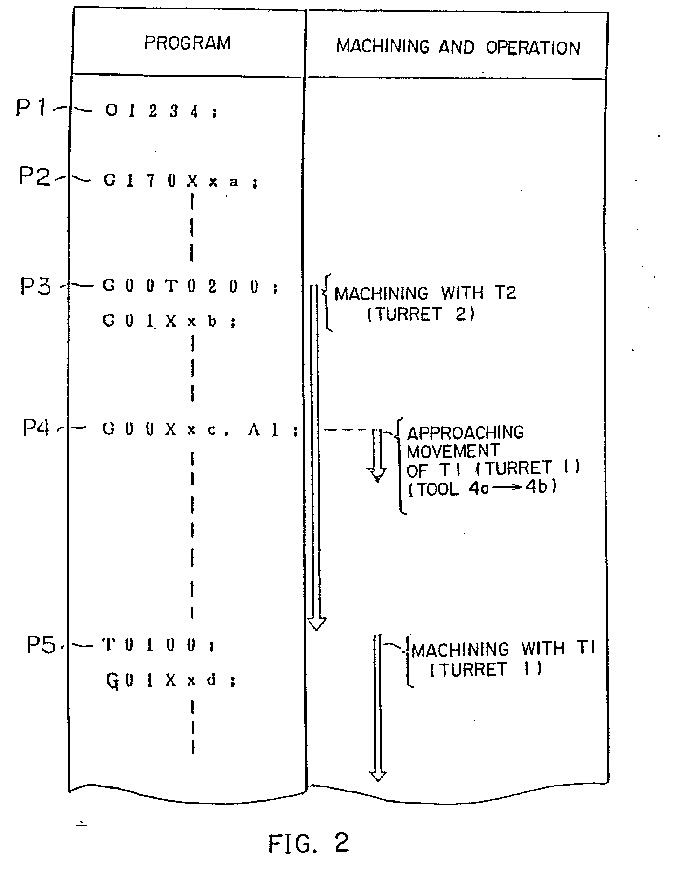

The details of a program will be described. FIG. 2 shows a program according to the embodiment by way of example. The program is illustrated in the lefthand side of FIG. 2, whereas actual operation of a numerically controlled apparatus is shown in the righthand side of FIG. 2.

P1 designates a program number.

P2 represents a command for setting an approaching distance, indicating the distance between the tool 4b on the first turret 4 and the workpiece 1.

P3 indicates a command for selecting a tool on the second turret 3. From now on, a machining operation with the second turret 4 is started.

P4 denotes a command for effecting approaching movement of the first turret 4, the approaching movement being commanded by "···, A1". During this time, the workpiece 1 is machined by the tool on the second turret 3. Therefore, the machining operation with the tool 3a on the second turret 3 and the replacement of the tool 4a with the tool 4b on the first turret 4 are carried out at the same time. Consequently, no tool changing time is wasted.

P5 represents a command for selecting the first turret 4. At this time, the workpiece 1 starts being machined by the tool 4b on the first turret 4. Since the tool 4b has already been selected and positioned in the approaching point, the tool 4a on the first turret 4 can immediately start machining the workpiece 1.

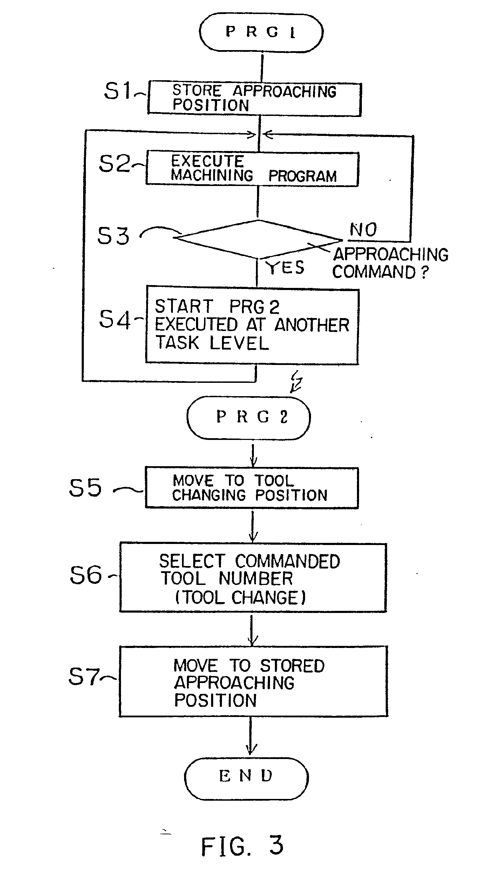

Operation of the embodiment will now be described with reference to a flowchart shown in FIG. 3. Each step of the flowchart is denoted by S and a following number, such as S1, S2.

[S1]

The approaching position is stored. This is executed by the program P2.

[S2]

An NC program is executed.

[S3]

This step determines whether a command is an approaching command. If not an approaching command, then control proceeds to a next command.

[S4]

If an approaching command, then control jumps to PRG2 which is executed at another high task level.

[S5]

The first turret 4 is moved to the tool changing position 5, and the tool 4b is replaced with the tool 4a. [S6]

After the tool change, the first turret 4 is positioned into the approaching position which has been specified in advance.

As a result, the tool 4b on the first turret 4 can immediately start machining the workpiece 1.

While the above embodiment has been described with respect to the two turrets, the present invention is also applicable to more turrets by selecting a machining turret to be used next.

With the present invention, as described above, while a workpiece is being machined by one turret, a tool on another turret is selected. Therefore, no time is wasted when effecting a next machining operation.

CLAIMS


1. A high-efficiency tool selecting method in machining operation using a numerically controlled lathe having a plurality of turrets, said method comprising the steps of:

commanding a tool changing operation on a turret to be used next in a machining program;

executing the tool changing operation on the turret to be used next while at the same time a machining operation is being effected by a tool of a turret now in use; and

positioning the turret to be used next into a machining starting point.

2. A high-efficiency tool selecting method according to claim 1, wherein a distance by which a tool on said turret to be used next approaches a workpiece is programmed as a command in advance in said machining program.

FIG. 1

| PROGRAM | MACHINING AND OPERATION |
|---|---|
| P1 — O 1 2 3 4 ; | |
| P2 — G 1 7 0 X x a ; | |
| P3 — G 0 0 T 0 2 0 0 ; <br> G 0 1 X x b ; | MACHINING WITH T2 (TURRET 2) |
| P4 — G 0 0 X x c . A 1 ; | APPROACHING MOVEMENT OF T I (TURRET I) (TOOL 4a → 4b) |
| P5 — T 0 1 0 0 ; <br> G 0 1 X x d ; | MACHINING WITH T I (TURRET I) |

FIG. 2

0314802

```
                    ┌─────────┐
                    │  P R G 1 │
                    └─────────┘
                         │
          ┌────────────────────────────┐
   S1 ─   │ STORE  APPROACHING          │
          │ POSITION                    │
          └────────────────────────────┘
                         │
       ┌─────────────────┼──────────────────┐
       │                 ▼                   │
       │   ┌────────────────────────────┐    │
   S2 ─│   │ EXECUTE                     │    │
       │   │ MACHINING   PROGRAM         │    │
       │   └────────────────────────────┘    │
       │                 │                    │
       │                 ▼          NO        │
   S3 ─│           ◇ APPROACHING ────────────┘
       │           ◇ COMMAND ?
       │             YES │
       │                 ▼
       │   ┌────────────────────────────┐
   S4 ─│   │ START  PRG 2                │
       │   │ EXECUTED AT ANOTHER         │
       │   │ TASK LEVEL                  │
       │   └────────────────────────────┘
       └─────────────────┘
```

```
                    ┌─────────┐
                    │  P R G 2 │
                    └─────────┘
                         │
          ┌────────────────────────────┐
   S5 ─   │ MOVE  TO  TOOL              │
          │ CHANGING  POSITION          │
          └────────────────────────────┘
                         │
          ┌────────────────────────────┐
   S6 ─   │ SELECT COMMANDED            │
          │ TOOL  NUMBER                │
          │ (TOOL CHANGE)               │
          └────────────────────────────┘
                         │
          ┌────────────────────────────┐
   S7 ─   │ MOVE  TO  STORED            │
          │ APPROACHING                 │
          │ POSITION                    │
          └────────────────────────────┘
                         │
                    ┌─────────┐
                    │  E N D  │
                    └─────────┘
```

FIG. 3

0314802

# INTERNATIONAL SEARCH REPORT

International Application No  PCT/JP88/00423

| I. CLASSIFICATION OF SUBJECT MATTER (if several classification symbols apply, indicate all) 6 |
|---|
| According to International Patent Classification (IPC) or to both National Classification and IPC |
| Int.Cl⁴    B23B3/16 |

**II. FIELDS SEARCHED**

Minimum Documentation Searched 7

| Classification System | Classification Symbols |
|---|---|
| IPC | B23B3/16, B23Q3/155, 157 |

Documentation Searched other than Minimum Documentation
to the Extent that such Documents are Included in the Fields Searched 8

| | |
|---|---|
| Jitsuyo Shinan Koho | 1966 – 1988 |
| Kokai Jitsuyo Shinan Koho | 1971 – 1988 |

**III. DOCUMENTS CONSIDERED TO BE RELEVANT 9**

| Category * | Citation of Document, 11 with indication, where appropriate, of the relevant passages 12 | Relevant to Claim No. 13 |
|---|---|---|
| Y | JP, A, 60-263644 (Mitsubishi Electric Corporation) 27 December 1985 (27. 12. 85) (Family: none) | 1, 2 |
| Y | JP, A, 50-26178 (Toyoda Machine Works, Ltd. and Toyota Motor Corporation) 19 March 1975 (19. 03. 75) (Family: none) | 1, 2 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 10, 1988 (10. 05. 88) | May 23, 1988 (23. 05. 88) |
| International Searching Authority | Signature of Authorized Officer |
| Japanese Patent Office | |

Form PCT/ISA/210 (second sheet) (January 1985)